# EUROPÄISCHE PATENTSCHRIFT

(11) **EP 4 031 846 B1**
(45) Veröffentlichungstag und Bekanntmachung des Hinweises auf die Patenterteilung: **30.10.2024**
(21) Anmeldenummer: 19774085.5
(22) Anmeldetag: 20.09.2019
(51) Int. Cl.: G01L 21/34, H01J 41/06, H01J 27/14

(54) **VAKUUMDICHTE ELEKTRISCHE DURCHFÜHRUNG**
VACUUM-TIGHT ELECTRICAL FEEDTHROUGH
TRAVERSÉE ÉLECTRIQUE ÉTANCHE AU VIDE

(43) Veröffentlichungstag der Anmeldung: 27.07.2022
(73) Patentinhaber: Inficon AG, 9496 Balzers (LI)
(72) Erfinder: KAISER, Stefan, 9487 Gamprin (LI); ANDREAUS, Bernhard, 8640 Rapperswil (CH)
(74) Vertreter: Troesch Scheidegger Werner AG
(86) Internationale Anmeldenummer: PCT/EP2019/075368
(87) Internationale Veröffentlichungsnummer: WO 2021/052600

(56) Entgegenhaltungen:
- WO-A1-2019/082893
- DE-A1- 1 473 636
- DE-A1- 3 712 874
- GB-A- 2 441 582
- US-A1- 2004 179 187
- US-A1- 2010 277 724
- US-A1- 2016 131 548
- US-B1- 6 701 789
- US-B2- 8 456 167

## Beschreibung

Die vorliegende Erfindung betrifft eine vakuumdichte elektrische Durchführung. Weiter betrifft die Erfindung einen Vakuumdrucksensor mit der elektrischen Durchführung.

Es ist bekannt, von einem Plasma emittierte elektromagnetische Strahlung durch ein optisches Fenster aus einem Vakuumbereich herauszuführen und zu messen resp. zu analysieren. Die Quelle solcher Strahlung hat oftmals die Form einer wolkenartig verteilten Anordnung von Punktquellen und strahlt divergierende und relative schwache Strahlung aus. Daher ist die ausserhalb des Vakuumbereichs verfügbare Strahlungsintensität oft schwach.

Die Offenlegungsschrift DE 37 12 874 A1 offenbart ein Penning-Vakuummeter und in diesem Zusammenhang eine elektrische Durchführung eines Wolfram-Anodenstabs, welcher sich durch eine Durchgangsöffnung erstreckt, welche ihrerseits mittels einer Glasperle als Isolator-Element abgedichtet ausgeführt ist.

Die Offenlegungsschrift WO 2019/082893 offenbart eine Vorrichtung mit einer Durchführung für eine Anode und mit einem separatem Fenster mit einer Linse für einen optischen Sensor.

Die Aufgabe der vorliegenden Erfindung bestand darin, die für Messungen und Analyse verfügbare Strahlungsintensität von in einem Vakuumbereich entstehender elektromagnetischer Strahlung zu erhöhen. Insbesondere war eine Aufgabe der Erfindung, für Messungen und Analysen verfügbare Strahlungsintensität von aus einem Vakuumdrucksensor im optischen Bereich emittierter Strahlung zu erhöhen.

Diese Aufgabe wird erfindungsgemäss gelöst durch eine vakuumdichte elektrische Durchführung gemäss Anspruch 1.

Die erfindungsgemässe vakuumdichte elektrische Durchführung umfasst ein elektrisch isolierendes Isolator-Element mit einer Durchgangsöffnung, mit einer an die Durchgangsöffnung angrenzenden ersten Begrenzungsfläche und mit einer ebenfalls an die Durchgangsöffnung angrenzenden, der ersten Begrenzungsfläche gegenüberliegenden zweiten Begrenzungsfläche. Die erfindungsgemässe vakuumdichte elektrische Durchführung umfasst weiter ein elektrisch leitendes Leiter-Element, welches sich durch die Durchgangsöffnung hindurch erstreckt und welches entlang einer Umfangslinie des Leiter-Elements vakuumdicht mit dem Isolator-Element verbunden ist. Das Isolator-Element ist für elektromagnetische Strahlung in einem optischen Wellenlängenbereich durchlässig. Die erste und/oder die zweite Begrenzungsfläche ist als gekrümmte Fläche ausgebildet. Die gekrümmte Fläche kann insbesondere als konvexe oder konkave Fläche ausgebildet sein.

Das elektrisch leitende Leiter-Element erstreckt sich also durch die Durchgangsöffnung im Isolator-Element hindurch. Es definiert eine Durchführungs-Achse der elektrischen Durchführung. Die erste und die zweite Begrenzungsfläche umgeben das Leiter-Element je auf einer Seite des Isolator-Elements und sind in Richtung der Durchführungs-Achse voneinander beabstandet. Im Einsatz in einem Vakuumsystem, ist eine der Begrenzungsflächen, beispielsweise die erste Begrenzungsfläche, vakuumseitig und die andere der Begrenzungsflächen, beispielsweise die zweite Begrenzungsfläche, auf der dem Vakuum abgewandten Seite der elektrischen Durchführung angeordnet. Das Isolator-Element kann zusätzlich zur genannten ersten und zweiten Begrenzungsfläche weitere Begrenzungsflächen aufweisen, beispielsweise eine in radialer Richtung zur Durchführungs-Achse auf die Durchführungs-Achse hin ausgerichtete Begrenzungsfläche der Durchführungsöffnung. Weiter kann die elektrische Durchführung an einem radialen nach aussen weisenden Rand eine Begrenzungsfläche aufweisen, welche die genannte erste und zweite Begrenzungsfläche an einem äusseren Umfang der elektrischen Durchführung separiert.

Die Form und Anordnung der ersten und zweiten Begrenzungsfläche sind so ausgestaltet, dass in Richtung der Durchführungs-Achse auf das Isolator-Element auftreffende elektromagnetische Strahlung beim Durchqueren des Isolator-Elements fokussiert wird, d.h. vor dem Durchqueren des Isolator-Elements parallel verlaufende, voneinander beabstandete Strahlen nähern sich nach dem Durchqueren an oder kreuzen sich. Maximal eine der genannten ersten und zweiten Begrenzungsfläche kann eben sein. Insbesondere Kombinationen der ersten und zweiten Begrenzungsflächen, welche eine bikonvexe, bikonkave, plankonvexe oder plankonkave Anordnung bilden, sind möglich.

Die Erfinder haben erkannt, dass es besonders effizient ist, elektromagnetische Strahlung eines optischen Wellenlängenbereichs an derselben Stelle aus dem Vakuumbereich herauszuführen, an dem elektrische Energie durch elektrische Durchführungen hindurch in einen Vakuumbereich zugeführt wird. Die zugeführte elektrische Energie kann beispielsweise die elektrische Energie zur Erzeugung eines Plasmas sein. Eine vom Grundaufbau her bekannte Durchführung mit einem elektrischen Leiter, welcher durch einen Isolator hindurchgeführt ist und wobei der Leiter und der Isolator vakuumdicht verbunden sind, kann aufgrund der erfindungsgemässen Kombination von Merkmalen gleichzeitig als optische Durchführung wirken.

Die Erfinder haben erkannt, dass mit der erfindungsgemässen elektrischen Durchführung eine kompakte Bauweise von Geräten ermöglicht wird, bei denen sowohl eine Zufuhr elektrischer Energie in einen Vakuumbereich hinein und die Messung oder die Analyse von aus dem Vakuumbereich hinaus emittierter Strahlung gleichzeitig ermöglicht wird. Durch die gekrümmte Begrenzungsfläche resp. durch die gekrümmten Begrenzungsflächen kann die Strahlung fokussiert und somit die Strahlungsintensität erhöht werden. Die Erfinder haben weiter erkannt, dass dies besonders effizient ist, wenn elektrische und optische Durchführung ein und dasselbe Bauelement verwirklicht sind und wenn dieses Bauelement gleichzeitig die Funktion einer Linse hat. Man kann die Erfindung also als elektrisch-optische Vakuum-Durchführung sehen.

Die elektromagnetische Strahlung aus einem optischen Wellenlängenbereich kann beispielsweise sichtbares Licht, Infrarotstrahlung oder Ultraviolett-Strahlung sein. Mit der erfindungsgemässen elektrischen Durchführung kann eine Erhöhung der Intensität der Strahlung um einen Faktor 100 oder mehr erhöht werden, im Vergleich zur Strahlungsintensität, welche beispielsweise via ein simples, beidseitig planares Fenster ausserhalb des Vakuumbereichs verfügbar wäre.

Das Leiter-Element kann aus Metall sein, insbesondere kann das Leiter-Element aus Molybdän bestehen. Das Isolator-Element kann beispielsweise aus Saphir bestehen.

Ausführungsformen der elektrischen Durchführung ergeben sich aus den Merkmalen der abhängigen Ansprüche 2 bis 6.

Eine Ausführungsform der elektrischen Durchführung umfasst weiter einen metallischen Rahmen, der entlang einer Umfangslinie des Isolator-Elements, welche die erste und die zweite Begrenzungsfläche voneinander separiert, vakuumdicht mit dem Isolator-Element verbunden ist.

Der metallische Rahmen ermöglicht, die elektrische Durchführung beispielsweise durch Schweissen mit weiteren Elementen einer Vakuum-Anlage vakuumdicht zu verbinden. Die vakuumdichte Verbindung zwischen Isolator-Element und metallischem Rahmen kann beispielsweise durch einen Schmelzglas-Ring gebildet sein. Der Schmelzglas-Ring kann insbesondere aus einem Lotglas bestehen. Der metallische Rahmen kann in Form eines Rings ausgebildet sein. Der metallische Rahmen kann beispielsweise einen Flansch aufweisen, welcher so ausgestaltet ist, dass er ein Verschweissen des Rahmens mit weiteren Elementen erleichtert. Der metallische Rahmen kann beispielsweise aus einem nichtrostenden austenitischen Stahl bestehen, beispielsweise aus Stahl 1.4435, welcher sich durch eine hohe Korrosionsbeständigkeit auszeichnet.

In einer Ausführungsform der elektrischen Durchführung erstreckt sich das Leiter-Element entlang einer Achse und die erste Begrenzungsfläche weist einen ersten Bereich auf und die zweite Begrenzungsfläche weist einen zweiten Bereich auf, wobei der erste und der zweite Bereich die Form einer ersten und einer zweiten Rotationsfläche mit der Achse als gemeinsamer Rotationsachse haben.

Die erste und/oder die zweite Rotationsfläche können eine sphärische oder eine asphärische Rotationsfläche sein. Ein Spezialfall einer Rotationsfläche ist eine Ebene, welche senkrecht zur Achse liegt. Beispielsweise die erste Begrenzungsfläche kann sich entlang einer Ebene senkrecht zur Achse erstrecken. In diesem Fall muss die zweite Begrenzungsfläche zwingend gekrümmt sein.

In der erfindungsgemässen elektrischen Durchführung ist das Leiter-Element stabförmig ausgebildet und das Leiter-Element hat ein erstes Stabende, welches weiter über die erste Begrenzungsfläche hinausragt als ein zweites Stabende über die zweite Begrenzungsfläche hinausragt.

Die erfindungsgemässe elektrische Durchführung kann beispielsweise dann verwendet werden, wenn elektromagnetische Strahlung in einem Bereich ausserhalb des ersten Stabendes fokussiert werden soll. Ein Anschluss des Leiter-Elements im Bereich des ersten Stabendes an eine Stromzufuhr kann beispielsweise über eine Lasche erfolgen, welche quer zum Stab an den Bereich nahe am ersten Stabende herangeführt wird. Eine derart angeordnete Lasche verdeckt nur wenig der nutzbaren Querschnittsfläche, durch welche Strahlung zum Fokuspunkt gelangen kann.

In der erfindungsgemässen elektrischen Durchführung bildet das Isolator-Element eine Abbildungslinse, welche zumindest einen ersten Objektpunkt im Bereich zwischen der ersten Begrenzungsfläche und dem ersten Stabende auf einen ersten Bildpunkt abbildet, welcher weiter von der ersten Begrenzungsfläche entfernt ist, als das zweite Stabende.

Eine Abbildungslinse ist durch ihre Brennweite F charakterisiert. Ein Objektpunkt mit Distanz G von der Linse wird in einen Bildpunkt mit Distanz B von der Linse abgebildet, wobei der Zusammenhang 1/G + 1/B = 1/F gilt.

Durch einen mehrteiligen Aufbau aus verschiedenen Materialien kann ein auf sphärische und/oder chromatische Aberration korrigiertes Linsensystem erreicht werden. In einem solchen System reicht es aus, dass eine Linse des Linsensystems die Rolle des Isolator-Element hat, welches vakuumdicht mit dem Leiter-Element verbunden ist.

In einer Ausführungsform der elektrischen Durchführung ist das Isolator-Element eine plankonvexe Linse mit zentraler Durchgangsöffnung.

In einer Ausführungsform der elektrischen Durchführung besteht das Isolator-Element aus Saphir.

Saphir hat einen hohen Transmissionsgrad im Wellenlängenbereich 200 nm bis 5000 nm und damit besonders geeignet, um elektromagnetische Strahlung aus dem optischen Bereich mit geringem Verlust aus einem Vakuumbereich hinauszuführen. Insbesondere ist die Transmission im Ultraviolett-Bereich oberhalb von 200 nm hoch. Ausserdem ist Saphir mechanisch sehr robust.

In einer Ausführungsform der elektrischen Durchführung bildet ein Schmelzglas-Ring eine vakuumdichte Verbindung zwischen Leiter-Element und Isolator-Element.

Zur Herstellung der vakuumdichten Verbindung wird der Schmelzglas-Ring geschmolzen und das Leiter-Element eingeglast. Der Schmelzglas-Ring kann insbesondere aus einem Lotglas bestehen.

Die Merkmale der Ausführungsformen der elektrischen Durchführung sind im Rahmen der Erfindung beliebig kombinierbar, soweit sie sich nicht gegenseitig ausschliessen.

Die Erfindung bezieht sich weiter auf einen Vakuumdrucksensor gemäss Anspruch 7. Der erfindungsgemässe Vakuumdrucksensor hat eine erfindungsgemässe elektrische Durchführung. Sämtliche oben erwähnten Ausführungsformen der elektrischen Durchführung kommen für die Verwendung im erfindungsgemässen Vakuumdrucksensor in Frage.

Ausführungsformen des Vakuumdrucksensors ergeben sich aus den Merkmalen der Ansprüche 8 bis 12.

In einer Ausführungsform des Vakuumdrucksensors ist der Vakuumdrucksensor als Kaltkathoden-Vakuummeter ausgebildet und das Leiter-Element bildet die Anode des Kaltkathoden-Vakuummeters.

In einer Ausführungsform des Vakuumdrucksensors ist die erste Begrenzungsfläche einem Plasmabereich des Vakuumdrucksensors zugewandt und ein optischer Sensor auf der Seite der zweiten Begrenzungsfläche ist so angeordnet, dass sich elektromagnetische Strahlung des genannten optischen Wellenlängenbereichs aus dem Plasmabereich durch das Isolator-Element hindurch zum optischen Sensor ausbreiten kann.

In einer Ausführungsform des Vakuumdrucksensors mit einer elektrischen Durchführung gemäss einer Ausführungsform, bei welcher das Isolator-Element eine Abbildungslinse bildet, welche zumindest einen ersten Objektpunkt im Bereich zwischen der ersten Begrenzungsfläche und dem ersten Stabende auf einen ersten Bildpunkt abbildet, welcher weiter von der ersten Begrenzungsfläche entfernt ist, als das zweite Stabende, liegt der erste Objektpunkt im Plasmabereich des Vakuumdrucksensor und ist der optische Sensor am ersten Bildpunkt angeordnet.

In einer Ausführungsform des Vakuumdrucksensors ist der Plasmabereich durch eine Magnetanordnung auf einen vom Isolator-Element entferntes Ende der Anode eingeschränkt.

Dies kann beispielsweise dadurch erreicht werden, dass Polschuhe aus ferromagnetischem Material ringförmig um die Anoden herum angeordnet ist, wobei die Polschuhe in einem Bereich, welche dem Isolator-Element der elektrischen Durchführung nahe liegt, näher an die Anode herankommt, als in einem zweiten Bereich, welcher weiter vom Isolator-Element beabstandet ist. Eine solche Anordnung bewirkt, dass sich die Hauptstrahlungsquelle im zweiten Bereich ausbildet.

In einer Ausführungsform des Vakuumdrucksensors weist das Leiter-Element in einem Bereich nahe des Isolator-Elements eine elektrisch isolierende Beschichtung auf.

Eine solche elektrisch isolierenden Beschichtung unterdrückt die Ausbildung eines Plasmas nahe am Isolator-Element und das Plasma wird im Sollbereich, nämlich dort wo die Anode keine isolierende Beschichtung aufweist, gezündet. Eine elektrisch isolierende Beschichtung kann beispielsweise aus einer dünnen Aluminiumoxid-Schicht (Al2O3-Schicht) bestehen. Die Beschichtung kann beispielweise in einem Atomic-Layer-Deposition-Verfahren (ALD-Verfahren) auf die Anode aufgebracht werden. Die Anwendung eines ALD-Verfahrens führt zu einer sehr gleichmässigen Schichtdicke ohne Fehlstehlen, sodass bereits mit einer sehr dünnen Isolationsschicht die gewünschte Unterdrückung des Plasmazündung erreicht werden kann.

Die Erfindung betrifft weiter ein Verfahren nach Anspruch 13.

Es handelt sich dabei um ein Verfahren zur Messung einer Strahlungsintensität elektromagnetischer Strahlung in einem optischen Wellenlängenbereich, wobei das Verfahren die Schritte umfasst:
a) Bereitstellen einer Vakuumanlage mit einer vakuumdichten elektrischen Durchführung, wobei die vakuumdichte elektrische Durchführung
   ein elektrisch isolierendes Isolator-Element mit einer Durchgangsöffnung, mit einer an die Durchgangsöffnung angrenzenden ersten Begrenzungsfläche und mit einer ebenfalls an die Durchgangsöffnung angrenzenden, der ersten Begrenzungsfläche gegenüberliegenden zweiten Begrenzungsfläche, und ein elektrisch leitendes Leiter-Element, welches sich durch die Durchgangsöffnung hindurch erstreckt und welches entlang einer Umfangslinie des Leiter-Elements vakuumdicht mit dem Isolator-Element verbunden ist, umfasst;
b) Zuführen von elektrischer Energie durch das Leiter-Element in einen Vakuumbereich der Vakuumanlage zur Zündung und Aufrechterhaltung eines Plasmas im Vakuumbereich;
c) Messen der Strahlungsintensität von aus dem Plasma emittierten elektromagnetischer Strahlung mittels eines optischen Sensors;
wobei die elektromagnetische Strahlung ausgehend vom Plasma durch das Isolator-Element hindurch auf den optischen Sensor strahlt.

Im erfindungsgemässen Verfahren ist das Isolator-Element für elektromagnetische Strahlung in einem optischen Wellenlängenbereich durchlässig und die erste und/oder die zweite Begrenzungsfläche ist als gekrümmte Fläche, insbesondere als konvexe oder konkave Fläche, ausgebildet.

Die Messung kann insbesondere auf eine einzelne Wellenlänge angewendet werden, z.B. auf eine spezifische Emissionslinie eines Restgases im Vakuum. Beispielsweise kann die charakteristische Sauerstoff-Emissionslinie bei ca. 777 nm beobachtet werden. Eine Änderung der Linienintensität kann als Indikator für ein Leck dienen. Eine Leckdetektion ist innerhalb von 60 Sekunden möglich - anders als bei Verfahren, bei denen die die Kammer beispielsweise auf 600°C aufgeheizt wird und ein anschliessendes Abkühlen abgewartet werden muss.

Alternativ könne auch Intensitäten anderer Linien, wie bspw. von Stickstoff, das als Purge-Gas dient, beobachtet werden. Wasserstoff-Lecks oder Stickstoff-Lecks können durch Messung der Intensität bei einer entsprechenden Wasserstoff- oder Stickstoff-Emissionslinie schnell detektiert werden.

Die Anwendung des Verfahrens im Zusammenhang mit Vakuumdrucksensoren ermöglicht die Korrektur der Gasabhängigkeit einer Strom-Druck-Kennlinie. Eine Linearisierung des Drucksignals abhängig vom detektierten Gas wird möglich. Komponenten der Gaszusammensetzung können anhand der gemessenen Strahlungsintensitäten bei definierten Wellenlängen ermittelt werden.

Eine Anwendung der erfindungsgemässen elektrischen Durchführung kommt insbesondere für Plasmaquellen in Frage. Beispiele für Plasmaquellen sind Elektron-Zyklotron-Resonanz Ionenquellen (electron cyclotron resonance, ECR, ion sources), Penning-Entladungen, Induktive gekoppelte Plasmen (inductively coupled plasma, ICP) oder Glühentladungs-Quellen (glow discharge source) etc. In Vakuumdrucksensoren mit Penning-, Magnetron- und invertierte Magnetron-Anordnung entstehen Plasmen welche Strahlung emittieren. Diese Anordnungen können sehr kompakt gebaut werden und können auch bei niedrigen Drücken bis hinunter zu 10⁻⁸ mbar ausreichend Ionenausbeute sicherstellen. Die drei letztgenannten Plasmaquellen werden unter dem Sammelbegriff ExB-Quellen zusammengefasst. Diese

Anordnungen profitieren besonders von der erfindungsgemässen elektrischen Durchführung.

Eine oder mehrere erfindungsgemässe elektrische Durchführungen können an ein und derselben Vakuum-Anlage oder an einem Vakuum-Gerät, beispielsweise an einem VakuumDrucksensor, angebracht sein. Es besteht die Möglichkeit, elektromagnetische Strahlung aus einem Plasmabereich heraus auf verschiedenen Wegen und über zwei oder mehrere unterschiedliche Isolator-Elemente verschiedener elektrischer Durchführungen aus dem Vakuumbereich hinauszuführen oder, alternativ oder in Kombination, auch die Möglichkeit, zwei oder mehrere Plasmabereiche via elektrische Durchführung mit Linsenwirkung im optischen Bereich zu beobachten. Die Begrenzungsflächen des Isolator-Elements können beispielsweise so geformt sein, dass elektromagnetische Strahlung in mehr als einem Fokusbereich gebündelt werden. In all diesen Fällen können zwei (oder mehr) optische Detektoren so auf der Vakuum abgewandten Seite des jeweiligen Isolator-Elements oder der jeweiligen Isolator-Elemente angebracht sein, dass elektromagnetische Strahlung im relevanten optischen Wellenlängenbereich auf je einen der optischen Detektoren fällt und dort die Intensität der Strahlung erhöht ist. Es kann beispielsweise ein Detektor zur Messung der Intensität einer ersten Wellenlänge oder eines ersten Wellenlängenbereichs ausgelegt sein und ein zweiter Detektor zur Messung einer zweiten Wellenlänge oder eines zweiten Wellenlängenbereichs ausgelegt sein. Dabei profitiert jeder der Detektoren von der Wirkung der Erfindung, nämlich der erhöhten Intensität der elektromagnetischen Strahlung.

Ausführungsbeispiele der vorliegenden Erfindung werden nachstehend anhand von Figuren noch näher erläutert. Es zeigen
Fig. 1 schematisch und vereinfacht, einen Querschnitt durch eine erfindungsgemässe vakuumdichte elektrische Durchführung;
Fig. 2 in den Teilfiguren Fig. 2.a) bis 2.d) Querschnitte durch Ausführungsformen der elektrischen Durchführung;
Fig. 3 einen Querschnitt durch eine Ausführungsform des Vakuumdrucksensors;
Fig. 4 in Teilfigur 4.a) einen Querschnitt durch eine Ausführungsform des Vakuumdrucksensors zusammen mit einem Bündel von Strahlen von elektromagnetischer Strahlung und deren Auftreffen auf eine Bildebene; in

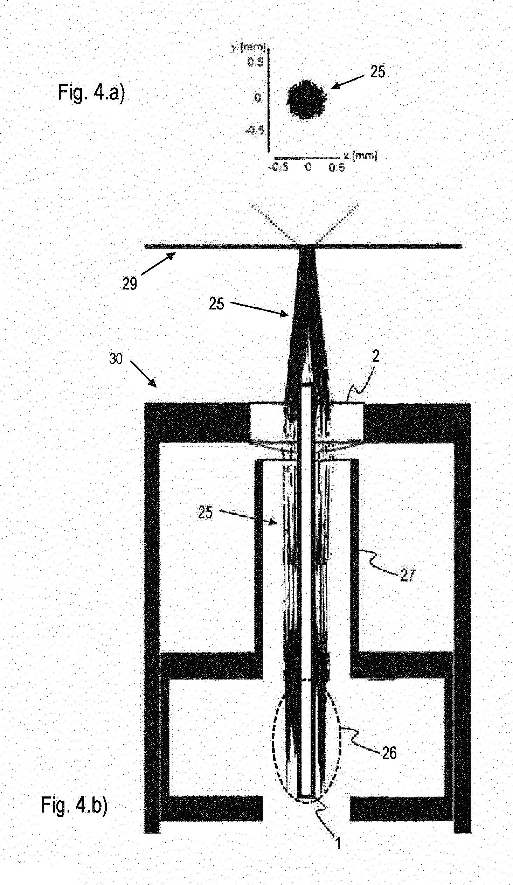

Fig. 4.b) in einer Aufsicht auf die Bildebene die Verteilung auf die Bildebene auftreffenden Strahlung.

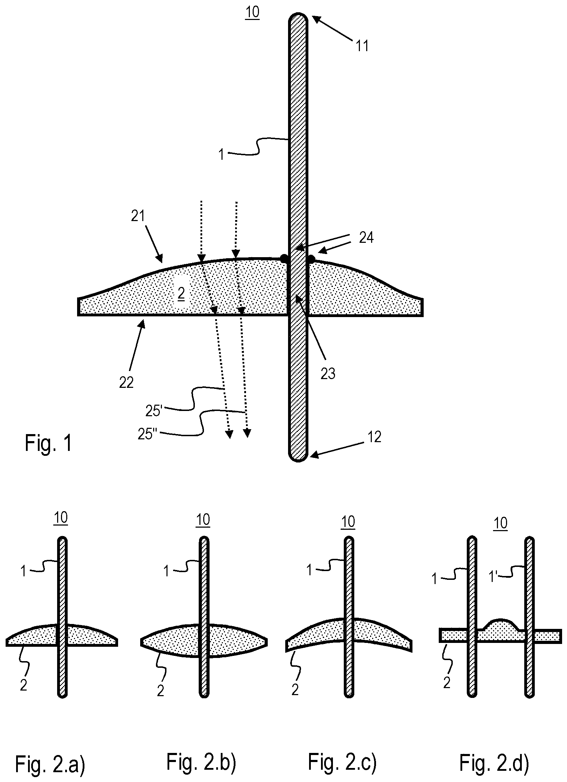

In Figur 1 ist ein Querschnitt durch eine erfindungsgemässe vakuumdichte elektrische Durchführung 10 dargestellt. Ein elektrisch leitendes Leiter-Element 1 führt durch eine Durchgangsöffnung 23 eines Isolator-Elements 2 hindurch. Das dargestellte Leiter-Element hat die Form eines Stabes mit einem ersten Stabende 11 und einem zweiten Stabende 12. Zwischen Leiter-Element 1 und Isolator-Element 2 besteht eine vakuumdichte Verbindung, welch im Querschnitt durch gefüllte Kreise symbolisiert ist. Die vakuumdichte Verbindung erstreckt sich entlang einer Umfangslinie um das Leiter-Element herum und wird in der Ebene dieser Querschnittsdarstellung an zwei Stellen geschnitten. Auf zwei gegenüberliegenden Seiten des Isolator-Elements grenzen eine erste Begrenzungsfläche 21 des Isolator-Elements und eine zweite Begrenzungsfläche 22 des Isolator-Elements an die Durchgangsöffnung an. Beispielhafte Strahlungspfade elektromagnetischer Strahlung 25', 25'' sind mit Pfeilen mit gestrichelter Linie dargestellt. Die beispielhaften Strahlungspfade 25', 25'' verlaufen durch das Isolator-Element, welches in einem optischen Wellenlängenbereich durchlässig ist, hindurch und ändern ihre Richtung an der ersten 21 und zweiten 22 Begrenzungsfläche. Die beiden dargestellten Strahlungspfade treffen parallel zueinander und parallel zur Richtung der Durchführungs-Achse, d.h. parallel zur Längsausdehnung des Leiter-Elements, auf das Isolator-Element. Nach Durchquerung des Isolator-Elements laufen die beiden Strahlungspfade aufeinander zu, was die Fokussierungswirkung der erfindungsgemässen elektrischen Durchführung illustriert. Die In der gezeigten Darstellung ist die erste Begrenzungsfläche eine gekrümmte Fläche, wobei ein äusserer Bereich konkav ausgebildet ist und ein zentraler Bereich konvex ausgebildet ist. Die zweite Begrenzungsfläche ist im dargestellten Fall eben.

In Figuren 2.a) bis 2.d) sind Varianten möglicher Kombinationen von Krümmungsarten der ersten und zweiten Begrenzungsfläche im Querschnitt dargestellt. Fig. 2.a) zeigt eine plankonvexe Anordnung, Fig. 2.b) zeigt eine bikonvexe Anordnung, Fig. 2.c) zeigt eine konkav-konvexe Anordnung und Fig. 2.d) zeigt eine Anordnung mit einer völlig ebenen ersten Begrenzungsfläche und einer im Bereich um durchgeführte Leiter-Elemente 1, 1' herum ebenen zweiten Begrenzungsfläche, wobei ein zentraler Bereich zwischen den Leiter-Elementen konvex ausgebildet ist. Die Variante 2.d) illustriert eine Ausführungsform mit mehr als einem Leiter-Element. Der Querschnitt verläuft durch das Leiterelement 1 und auch durch ein weiteres Leiterelement 1' mit gleichen Eigenschaften wie das schon besprochene Leiterelement 1. Fig. 2.a) bis 2.c) zeigen Durchführungen, bei denen das Leiter-Element zentral durch das Isolator-Element hindurchgeführt sind. Diese Querschnitte können beispielsweise die Querschnitte einer rotationssymmetrisch aufgebauten elektrischen Durchführung sein. Obwohl nicht mit einem graphischen Element verdeutlicht, sind die gezeigten Durchführungen in Fig. 2 und den folgenden Figuren vakuumdicht ausgeführt.

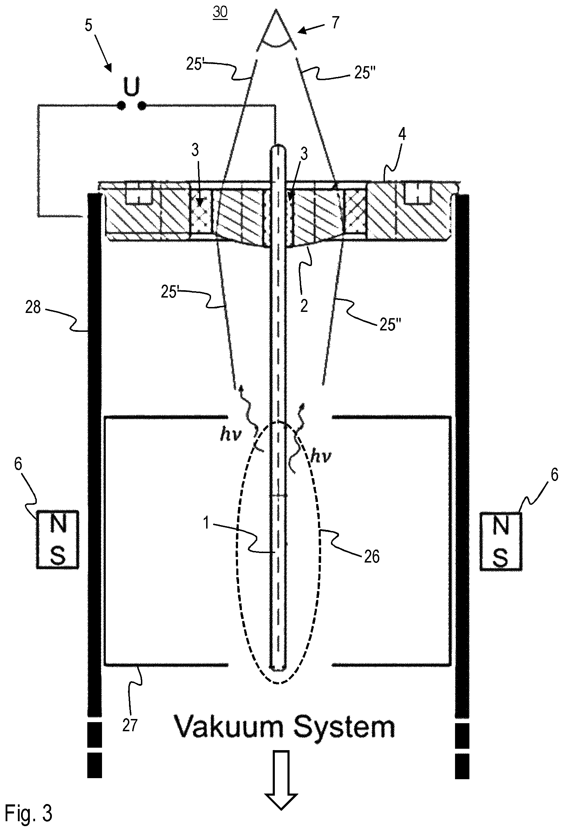

In Figur 3 ist ein Querschnitt durch einen erfindungsgemässen Vakuumdrucksensor gezeigt. Es handelt sich hier um einen Vakuumdrucksensor, der als Kaltkathoden-Vakuummeter ausgebildet ist. Das Leiter-Element 1 bildet die Anode des Kaltkathoden-Vakuummeters. Leiter-Element 1 und Isolator-Element 2 bilden eine erfindungsgemässe elektrische Durchführung, mit der von einer Spannungsquelle 5 elektrische Energie in einen Plasmabereich 26, dessen Lage mit gestrichelter Linie angedeutet ist, innerhalb des Drucksensor zugeführt werden kann. Eine Magnetanordnung 6 sorgt dafür, dass sich bewegte geladene Teilchen (Elektronen, Ionen) im Plasmabereich auf einer gekrümmten Bahn bewegen. Elektromagnetische Strahlung (hv), welche charakteristisch ist für den Zustand des Plasmas gelangt unter anderem durch das zumindest in einem optischen Wellenlängenbereich durchlässige Isolator-Element 2 hindurch zu einem optischen Sensor 7. Aufgrund der gekrümmten Begrenzungsflächen des Isolator-Elements wir die Strahlung gebündelt und trifft mit erhöhter Intensität beim optischen Sensor 7 ein. Der optische Sensor 7 kann ein einfacher Strahlungssensor, z.B. ein Lichtsensor sein, es kann sich aber auch um einen komplexeren optischen Sensor handeln, z.B. ein Spektrometer. Die Aussenwand des Vakuumdrucksensors bildet in der gezeigten Anordnung die Kathode des Kaltkathoden-Vakuummeters. Sie ist ebenfalls mit der Spannungsquelle 5 elektrisch verbunden. Die zum Vakuum-System hinführende Seite des Vakuumdrucksensors ist mit "Vakuum System" beschriftet, ohne dass Details zum Vakuum-System eingezeichnet sind. Natürlich ist diese Seite des Vakuumdrucksensors vakuumdicht ans Vakuumsystem angeschlossen. Die elektrische Durchführung umfasst in der gezeigten Ausführungsform einen metallischen Rahmen 4. Mittels je einem Schmelzglas-Ring 3 ist das Leiter-Element 1 mit dem Isolator-Element 2 vakuumdicht verbunden und ist das Isolator-Element 2 mit dem metallischen Ring 4 vakuumdicht verbunden. Der metallische Ring 4 ist an die in der gezeigten Ausführungsform zylinderförmige Kathode, welche ebenfalls aus einem Metall besteht, angeschweisst.

Beispielsweise kann das Isolator-Element der elektrischen Durchführung wie hier gezeigt als plankonvexe Linse ausgeführt sein, wobei die erste Begrenzungsfläche abschnittsweise eine kugelförmige Krümmung mit einem Krümmungsradius R aufweist. Eine Anordnung mit einem Spektrometer, welches beispielsweise in einem Abstand d = 10 mm von der planen zweiten Begrenzungsfläche auf der Vakuum-abgewandten Seite angeordnet ist, wird beispielsweise mit einem Krümmungsradius R = 8.5 mm der ersten Begrenzungsfläche kombiniert werden, um eine hohe Strahlungsintensität am optischen Sensor 7 zu erhalten, wenn der Brechungsindex des Isolator-Elements dem Brechungsindex von Saphir entspricht, insbesondere wenn das Isolator-Element aus Saphir besteht. Ein einseitig ebenes Isolator-Element hat den Vorteil, dass die Orientierung des Isolator-Elements beim Herstellungsprozess der elektrischen Durchführung sehr genau kontrolliert werden kann. Dies hat den Vorteil, dass die Position eines Brennpunktes mit einfachen Mitteln genau kontrolliert werden kann, was zu einer hohen Reproduzierbarkeit der Lage des Brennpunktes führt.

Zwei Strahlengänge von elektromagnetischer Strahlung 25', 25", welche vom Plasmabereich 26 ausgehen und durch das für die Strahlung durchlässige Isolator-Element 2 auf den optischen Sensor 7 hin fokussiert werden, sind dargestellt. Die Wellenlänge elektromagnetische Strahlung hvliegt im optischen Wellenlängenbereich. Polschuhe 27 führen das Magnetfeld der Magnetanordnung 6 derart, dass der Plasmabereich 26 auf einen Bereich der Anode eingeschränkt wird, welcher vom Isolator-Element 2 entfernt ist. Die Anode wird durch das Leiterelement 1 gebildet. Die Kathode 28 des Vakuum-Drucksensors ist im dargestellten Abschnitt zylinderförmig um die zentrale Anode herum angeordnet. Der gestrichelt dargestellte Bereich der Kathode kann in beliebiger Geometrie, aber vakuumdicht, einen Übergang an das Vakuum System bilden. Die Richtung zum Vakuum System ist mit einem Pfeil angedeutet. Es kann sich beim Vakuum System um eine Vakuum-Anlage, beispielsweise um eine Vakuum-Anlage zum Aufbringen dünner Schichten auf Substrate und/oder zur Prozessierung von Halbleiter-Wafern, handeln.

Figur 4 zeigt einen Querschnitt durch einen erfindungsgemässen Vakuumdrucksensor mit einem Bündel von Strahlen von elektromagnetischer Strahlung und deren Auftreffen auf eine Bildebene 29 wie sie aus einer Simulation der Strahlengänge erkennbar werden. Eine Vielzahl unterschiedlicher Strahlen mit Ausgangspunkt in einem Bereich um die Anode und welche auf das Isolator-Element treffen, werden auf der Bildebene fokussiert. Dabei ist die ungefähr kreisförmige Fläche, auf der die Strahlen in der Bildebene auftreffen kleiner, als die Fläche, auf welcher dieselbe Vielzahl von Strahlen auf das Isolator-Element auftrifft. Das bedeutet, dass die Strahlungsintensität in der kreisförmigen Fläche auf der Bildebene höher als die Strahlungsintensität auf derjenigen Begrenzungsfläche des Isolator-Elements, welche der Vakuumseite des Drucksensors zugewandt ist. Ein optischer Sensor, wie er in einer Ausführungsform des Drucksensors vorhanden ist, kann mit seiner empfindlichen Fläche dort angeordnet werden, wo die kreisförmige Fläche auf der Bildebene erkennbar ist. Wie anhand der Millimeterskala an den x- und y-Achsen (x [mm], y [mm]) in der Bildebene ablesbar, können die Strahlen auf einen kreisförmigen Bereich von ca. 0.5 mm Durchmesser fokussiert werden. Für die dargestellte Simulation wurden die Geometrieparameter verwendet wie in Fig. 3 beschrieben, d.h. insbesondere R = 8.5 mm und d = 10 mm, zusammen mit dem Brechungsindex von Saphir für das Isolator-Element 2.

### Bezugszeichenliste

- 1: Leiter-Element
- 1': weiteres Leiter-Element
- 2: Isolator-Element
- 3: Schmelzglas-Ring
- 4: metallischer Rahmen (Schweissring)
- 5: Spannungsquelle
- 6: Magnetanordnung
- 7: optischer Sensor
- 10: elektrische Durchführung
- 11: erstes Stabende
- 12: zweites Stabende
- 21: erste Begrenzungsfläche
- 22: zweite Begrenzungsfläche
- 23: Durchgangsöffnung
- 24: vakuumdichte Verbindung
- 25', 25", hv: elektromagnetische Strahlung
- 26: Plasmabereich
- 27: Polschuhe
- 28: Kathode
- 29: Bildebene
- 30: Vakuumdrucksensor
- N, S: Nordpol, Südpol der Magnetanordnung
- U: elektrische Spannung
Vakuum System Seite, an der im Betrieb Vakuum angelegt ist

## Patentansprüche

1. Vakuumdichte elektrische Durchführung (10) umfassend
- ein elektrisch isolierendes Isolator-Element (2) mit einer Durchgangsöffnung (23), mit einer an die Durchgangsöffnung angrenzenden ersten Begrenzungsfläche (21) und mit einer ebenfalls an die Durchgangsöffnung angrenzenden, der ersten Begrenzungsfläche gegenüberliegenden zweiten Begrenzungsfläche (22), und
- ein elektrisch leitendes Leiter-Element (1), welches sich durch die Durchgangsöffnung (23) hindurch erstreckt und welches entlang einer Umfangslinie des Leiter-Elements (1) vakuumdicht mit dem Isolator-Element (2) verbunden ist,
wobei das Isolator-Element (2) für elektromagnetische Strahlung (25', 25", hv) in einem optischen Wellenlängenbereich durchlässig ist und
wobei die erste (21) und/oder die zweite (22) Begrenzungsfläche als gekrümmte Fläche, insbesondere als konvexe oder konkave Fläche, ausgebildet ist, wobei das Leiter-Element (1) stabförmig ausgebildet ist mit einem ersten Stabende (11), welches weiter über die erste Begrenzungsfläche (21) hinausragt als ein zweites Stabende (12) über die zweite Begrenzungsfläche (22) hinausragt,
**dadurch gekennzeichnet, dass**
das Isolator-Element (2) eine Abbildungslinse bildet, welche zumindest einen ersten Objektpunkt im Bereich zwischen der ersten Begrenzungsfläche (21) und dem ersten Stabende (11) auf einen ersten Bildpunkt abbildet, welcher weiter von der ersten Begrenzungsfläche entfernt ist, als das zweite Stabende (12).

2. Elektrische Durchführung (10) nach Anspruch 1, weiter umfassend einen metallischen Rahmen (4), der entlang einer Umfangslinie des Isolator-Elements (2), welche die erste und die zweite Begrenzungsfläche voneinander separiert, vakuumdicht mit dem Isolator-Element verbunden ist.

3. Elektrische Durchführung (10) nach einem der Ansprüche 1 oder 2, wobei sich das Leiter-Element (1) entlang einer Achse erstreckt und wobei die erste Begrenzungsfläche (21) einen ersten Bereich und die zweite Begrenzungsfläche (22) einen zweiten Bereich aufweisen, wobei der erste und der zweite Bereich die Form einer ersten und einer zweiten Rotationsfläche mit der Achse als gemeinsamer Rotationsachse haben.

4. Elektrische Durchführung (10) nach Anspruch 1, wobei das Isolator-Element (2) eine plankonvexe Linse mit zentraler Durchgangsöffnung (23) ist.

5. Elektrische Durchführung (10) nach einem der Ansprüche 1 bis 4, wobei das Isolator-Element (2) aus Saphir besteht.

6. Elektrische Durchführung (10) nach einem der Ansprüche 1 bis 5, wobei ein Schmelzglas-Ring (3) eine vakuumdichte Verbindung zwischen Leiter-Element (1) und Isolator-Element (2) bildet.

7. Vakuumdrucksensor (30) mit einer elektrischen Durchführung (10) nach einem der Ansprüche 1 bis 6.

8. Vakuumdrucksensor (30) nach Anspruch 7, wobei der Vakuumdrucksensor als Kaltkathoden-Vakuummeter ausgebildet ist und wobei das Leiter-Element (1) die Anode des Kaltkathoden-Vakuummeters bildet.

9. Vakuumdrucksensor (30) nach Anspruch 8, wobei die erste Begrenzungsfläche (21) einem Plasmabereich des Vakuumdrucksensors zugewandt ist und wobei ein optischer Sensor (7) auf der Seite der zweiten Begrenzungsfläche (22) so angeordnet ist, dass sich elektromagnetische Strahlung (25) des genannten optischen Wellenlängenbereichs aus dem Plasmabereich durch das Isolator-Element (2) hindurch zum optischen Sensor (7) ausbreiten kann.

10. Vakuumdrucksensor (30) nach Anspruch 9 mit einer elektrischen Durchführung (10) nach Anspruch 5, wobei der erste Objektpunkt im Plasmabereich (26) des Vakuumdrucksensor liegt und wobei der optische Sensor (7) am ersten Bildpunkt angeordnet ist.

11. Vakuumdrucksensor (30) nach Anspruch 9 oder 10, wobei der Plasmabereich durch eine Magnetanordnung (6) auf einen vom Isolator-Element (2) entferntes Ende der Anode eingeschränkt ist.

12. Vakuumdrucksensor (30) nach einem der Ansprüche 7 bis 11, wobei das Leiter-Element (1) in einem Bereich nahe des Isolator-Elements (2) eine elektrisch isolierende Beschichtung aufweist.

13. Verfahren zur Messung einer Strahlungsintensität elektromagnetischer Strahlung in einem optischen Wellenlängenbereich, wobei das Verfahren die Schritte umfasst:
a) Bereitstellen einer Vakuumanlage mit einer vakuumdichten elektrischen Durchführung (10), wobei die vakuumdichte elektrische Durchführung (10)
- ein elektrisch isolierendes Isolator-Element (2) mit einer Durchgangsöffnung (23), mit einer an die Durchgangsöffnung angrenzenden ersten Begrenzungsfläche (21) und mit einer ebenfalls an die Durchgangsöffnung angrenzenden, der ersten Begrenzungsfläche gegenüberliegenden zweiten Begrenzungsfläche (22), und
- ein elektrisch leitendes Leiter-Element (1), welches sich durch die Durchgangsöffnung (23) hindurch erstreckt und welches entlang einer Umfangslinie des Leiter-Elements (1) vakuumdicht mit dem Isolator-Element (2) verbunden ist,
umfasst;
b) Zuführen von elektrischer Energie durch das Leiter-Element (1) in einen Vakuumbereich der Vakuumanlage zur Zündung und Aufrechterhaltung eines Plasmas im Vakuumbereich;
c) Messen der Strahlungsintensität von aus dem Plasma emittierten elektromagnetischer Strahlung mittels eines optischen Sensors (7);
**dadurch gekennzeichnet, dass**
das Isolator-Element (2) für elektromagnetische Strahlung (25', 25", hv) in einem optischen Wellenlängenbereich durchlässig ist,
dass die erste (21) und/oder die zweite (22) Begrenzungsfläche als gekrümmte Fläche, insbesondere als konvexe oder konkave Fläche, ausgebildet ist, und
dass die elektromagnetische Strahlung ausgehend vom Plasma durch das Isolator-Element (2) hindurch auf den optischen Sensor (7) strahlt.

14. Verfahren nach Anspruch 13, wobei die vakuumdichte elektrische Durchführung (10) als vakuumdichte elektrische Durchführung nach einem der Ansprüche 1 bis 6 ausgebildet ist.

## Claims

1. Vacuum-tight electrical feedthrough (10), comprising
- an electrically insulating insulator element (2) having a through-opening (23), having a first boundary surface (21) adjacent to the through-opening, and having a second boundary surface (22) also adjacent to the through-opening and opposite to the first boundary surface, and
- an electrically conductive conductor element (1) which extends through the through-opening (23) and which is connected in a vacuum-tight manner to the insulator element (2) along a circumferential line of the conductor element (1),
wherein the insulator element (2) is transmissive to electromagnetic radiation (25', 25", hv) in an optical wavelength range, and
wherein the first (21) and/or the second (22) boundary surface is formed as a curved surface, in particular as a convex or concave surface, wherein the conductor element (1) is of rod-shaped design having a first rod end (11) projecting further beyond the first boundary surface (21) than a second rod end (12) projects beyond the second boundary surface (22),
**characterized in that**
the insulator element (2) forms an imaging lens which images at least a first object point in the region between the first boundary surface (21) and the first rod end (11) onto a first image point that is further from the first boundary surface than the second rod end (12).

2. Electrical feedthrough (10) according to claim 1, further comprising a metallic frame (4) which is connected in a vacuum-tight manner to the insulator element (2) along a circumferential line of the insulator element separating the first and second boundary surfaces.

3. Electrical feedthrough (10) according to one of claims 1 or 2, wherein the conductor element (1) extends along an axis, and wherein the first boundary surface (21) has a first region and the second boundary surface (22) has a second region, wherein the first and second regions are in the form of first and second surfaces of rotation with the axis as a common axis of rotation.

4. Electrical feedthrough (10) according to claim 1, wherein the insulator element (2) is a plano-convex lens having a central through-opening (23).

5. Electrical feedthrough (10) according to one of claims 1 to 4, wherein the insulator element (2) is made of sapphire.

6. Electrical feedthrough (10) according to one of claims 1 to 5, wherein a fused glass ring (3) forms a vacuum-tight connection between conductor element (1) and insulator element (2).

7. Vacuum pressure sensor (30) having an electrical feedthrough (10) according to one of claims 1 to 6.

8. Vacuum pressure sensor (30) according to claim 7, wherein the vacuum pressure sensor is formed as a cold cathode vacuum meter and wherein the conductor element (1) forms the anode of the cold cathode vacuum meter.

9. Vacuum pressure sensor (30) according to claim 8, wherein the first boundary surface (21) faces a plasma region of the vacuum pressure sensor, and wherein an optical sensor (7) is arranged on the side of the second boundary surface (22) such that electromagnetic radiation (25) of the mentioned optical wavelength range can propagate from the plasma region through the insulator element (2) to the optical sensor (7).

10. Vacuum pressure sensor (30) according to claim 9, comprising an electrical feedthrough (10) according to claim 5, wherein the first object point is located in the plasma region (26) of the vacuum pressure sensor, and wherein the optical sensor (7) is arranged at the first image point.

11. Vacuum pressure sensor (30) according to claim 9 or 10, wherein the plasma region is restricted by a magnet assembly (6) to an end of the anode remote from the insulator element (2).

12. Vacuum pressure sensor (30) according to one of claims 7 to 11, wherein the conductor element (1) has an electrically insulating coating in a region near the insulator element (2).

13. Method for measuring a radiation intensity of electromagnetic radiation in an optical wavelength range, wherein the method comprises the steps of:
a) providing a vacuum apparatus having a vacuum-tight electrical feedthrough (10), wherein the vacuum-tight electrical feedthrough (10) comprises:
- an electrically insulating insulator element (2) having a through-opening (23), having a first boundary surface (21) adjacent to the through-opening, and having a second boundary surface (22) also adjacent to the through-opening and opposite to the first boundary surface, and
- an electrically conductive conductor element (1) which extends through the through-opening (23) and which is connected in a vacuum-tight manner to the insulator element (2) along a circumferential line of the conductor element (1);
b) supplying electrical energy through the conductor element (1) into a vacuum region of the vacuum apparatus to ignite and maintain a plasma in the vacuum region;
c) measuring the radiation intensity of electromagnetic radiation emitted from the plasma by means of an optical sensor (7);
**characterized in**
**that** the insulator element (2) is transmissive to electromagnetic radiation (25', 25", hv) in an optical wavelength range,
**that** the first (21) and/or the second (22) boundary surface is formed as a curved surface, in particular as a convex or concave surface, and
**that** the electromagnetic radiation radiates from the plasma through the insulator element (2) onto the optical sensor (7) .

14. Method according to claim 13, wherein the vacuum-tight electrical feedthrough (10) is formed as a vacuum-tight electrical feedthrough according to one of the claims 1 to 6.

## Revendications

1. Réalisation électrique étanche au vide (10) comprenant :
- un élément électriquement isolant (2) avec une ouverture de passage (23), une première surface de délimitation (21) adjacente à l'ouverture de passage et une deuxième surface de délimitation (22) opposée à la première surface de délimitation et également adjacente à l'ouverture de passage, et
- un élément électriquement conducteur (1) qui s'étend à travers l'ouverture de passage (23) et qui est raccordé à l'élément isolant (2) de façon étanche au vide le long d'une ligne circonférentielle de l'élément conducteur (1), l'élément isolant (2) étant perméable au rayonnement électromagnétique (25', 25'', hv) dans une plage de longueurs d'onde optique, et
la première (21) et/ou la deuxième surface de délimitation (22) étant réalisée sous la forme d'une surface incurvée, en particulier sous la forme d'une surface convexe ou concave, l'élément conducteur (1) étant réalisé sous la forme d'une tige avec une première extrémité de tige (11) qui dépasse la première surface de délimitation (21) et une deuxième extrémité de tige (12) qui dépasse la deuxième surface de délimitation (22),
**caractérisée en ce que**
l'élément isolant (2) forme une lentille de projection qui reproduit au moins un premier point objet sur un premier point image dans la zone entre la première surface de délimitation (21) et la première extrémité de tige (11),
lequel point image étant plus éloigné de la première surface de délimitation que la deuxième extrémité de tige (12) .

2. Réalisation électrique (10) selon la revendication 1, comprenant en outre un cadre métallique (4) qui est raccordé de façon étanche au vide à l'élément isolant le long d'une ligne circonférentielle de l'élément isolant (2) qui sépare la première et la deuxième surfaces de délimitation.

3. Réalisation électrique (10) selon l'une des revendications 1 ou 2, dans laquelle l'élément conducteur (1) s'étend le long d'un axe et dans laquelle la première surface de délimitation (21) présente une première zone et la deuxième surface de délimitation (22) une deuxième zone, la première et la deuxième zones ayant la forme d'une première et d'une deuxième surfaces de rotation avec l'axe comme axe de rotation commun.

4. Réalisation électrique (10) selon la revendication 1, dans laquelle l'élément isolant (2) est une lentille plan-convexe avec une ouverture de passage centrale (23).

5. Réalisation électrique (10) selon l'une des revendications 1 à 4, dans laquelle l'élément isolant (2) est composé de saphir.

6. Réalisation électrique (10) selon l'une des revendications 1 à 5, dans laquelle un anneau en verre fusible (3) forme une liaison étanche au vide entre l'élément conducteur (1) et l'élément isolant (2).

7. Capteur de pression sous vide (30) comprenant une réalisation électrique (10) selon l'une des revendications 1 à 6.

8. Capteur de pression sous vide (30) selon la revendication 7, le capteur de pression sous vide étant réalisé sous la forme d'un vacuomètre à cathode froide et l'élément conducteur (1) formant l'anode du vacuomètre à cathode froide.

9. Capteur de pression sous vide (30) selon la revendication 8, dans lequel la première surface de délimitation (21) est orientée vers une zone de plasma du capteur de pression sous vide et dans lequel un capteur optique (7) est agencé sur le côté de la deuxième surface de délimitation (22) de sorte que le rayonnement électromagnétique (25) de ladite plage de longueurs d'onde optique peut se propager depuis la zone de plasma à travers l'élément isolant (2) jusqu'au capteur optique (7).

10. Capteur de pression sous vide (30) selon la revendication 9 comprenant une réalisation électrique (10) selon la revendication 5, dans lequel le premier point objet se trouve dans la zone de plasma (26) du capteur de pression sous vide, et dans lequel le capteur optique (7) est agencé sur le premier point image.

11. Capteur de pression sous vide (30) selon la revendication 9 ou 10, dans lequel la zone de plasma est limitée par un agencement d'aimants (6) sur une extrémité de l'anode éloignée de l'élément isolant (2).

12. Capteur de pression sous vide (30) selon l'une des revendications 7 à 11, dans lequel l'élément conducteur (1) présente dans une zone proche de l'élément isolant (2) un revêtement électriquement isolant.

13. Procédé pour mesurer l'intensité d'un rayonnement électromagnétique dans une plage de longueurs d'onde optique, le procédé comprenant les étapes consistant à :
a) fournir une installation sous vide avec une réalisation électrique étanche au vide (10), la réalisation électrique étanche au vide (10) comprenant :
- un élément électriquement isolant (2) avec une ouverture de passage (23), une première surface de délimitation (21) adjacente à l'ouverture de passage et une deuxième surface de délimitation (22) opposée à la première surface de délimitation et également adjacente à l'ouverture de passage, et
- un élément électriquement conducteur (1) qui s'étend à travers l'ouverture de passage (23) et qui est raccordé de façon étanche au vide à l'élément isolant (2) le long d'une ligne circonférentielle de l'élément conducteur (1) ;
b) amener de l'énergie électrique à travers l'élément conducteur (1) dans une zone de vide de l'installation sous vide pour amorcer et maintenir un plasma dans la zone de vide ;
c) mesurer à l'aide d'un capteur optique (7) l'intensité de rayonnement du rayonnement électromagnétique émis par le plasma ;
**caractérisé en ce que** l'élément isolant (2) laisse passer le rayonnement électromagnétique (25', 25'', hv) dans une plage de longueurs d'onde optique, **en ce que** la première (21) et/ou la deuxième surface de délimitation (22) est réalisée sous la forme d'une surface incurvée, en particulier sous la forme d'une surface convexe ou concave, et **en ce que** le rayonnement électromagnétique rayonne sur le capteur optique (7) depuis le plasma à travers l'élément isolant (2).

14. Procédé selon la revendication 13, dans lequel la réalisation électrique étanche au vide (10) est réalisée sous la forme d'une réalisation électrique étanche au vide selon l'une des revendications 1 à 6.
